# DEMANDE DE BREVET EUROPEEN

(11) **EP 4 195 097 A1**
(43) Date de publication de la demande: **14.06.2023**
(21) Numéro de dépôt: 22206685.4
(22) Date de dépôt: 10.11.2022
(51) Int. Cl.: G06K 17/00, G04B 19/06, G04B 45/00, G04D 3/00

(54) **PROCÉDÉ ET SYSTEME D'IDENTIFICATION D'UNE PIÈCE D'HORLOGERIE**

(30) Priorité: 10.12.2021 EP 21213764
(71) Demandeur: The Swatch Group Research and Development Ltd, 2074 Marin (CH)
(72) Inventeur: BAZIN, Jean-Luc, 2512 Tüscherz-Alfermée (CH)
(74) Mandataire: ICB SA

(57) **Abrégé**

Un aspect de l'invention concerne un système (1) d'authentification d'une pièce d'horlogerie (4) comprenant un dispositif électronique (18) comportant une interface de diffusion (14b) visuelle et/ou sonore d'une information et un module d'acquisition (17) d'images ainsi qu'un serveur (2) comprenant une base de données (5) comprenant des éléments d'identifiants numérique de références (11), le système (1) comprenant une architecture réseau sans fil et/ou filaire reliant le dispositif électronique (18) audit serveur (2).

## Description

### Domaine technique de l'invention

L'invention concerne un procédé et un système d'identification/authentification d'une pièce d'horlogerie à partir d'un dispositif électronique.

L'invention concerne également un programme d'ordinateur comprenant des instructions de code de programme pour l'exécution des étapes de ce procédé.

### Arrière-plan technologique

De manière à pouvoir authentifier/identifier une pièce d'horlogerie telle qu'une montre mécanique ou électro-mécanique, il peut être prévu de munir la pièce d'une marque d'identification notamment pendant son procédé de fabrication. Cette marque d'identification peut se présenter sous la forme d'un codage appliqué par exemple sur une partie extérieure de la boîte de cette pièce non directement visible lorsque la pièce est portée au poignet pour ne pas nuire à l'esthétisme de ladite pièce. Ce codage peut être par exemple une image codée, telle qu'un code à barres à deux dimensions comme défini dans la demande de brevet EP 1 804 195 A1. Cette image codée, qui est obtenue par des algorithmes de calcul spécifiques, se base sur l'identifiant de la pièce, qui est généralement vendue avec une carte portant ledit identifiant de la pièce.

Toutefois, un des inconvénients principaux est lié au fait que pour pouvoir authentifier ladite pièce d'horlogerie, cela nécessite l'emploi d'un appareil informatique spécifique, ce qui est long et compliqué. Effet, ce code ne peut être décrypté que par une opération de décryptage au moyen de clés de décryptage fournies par la maison mère.

On comprend qu'il existe un besoin de trouver une solution alternative, notamment qui ne présente pas les inconvénients de l'art antérieur.

### Résumé de l'invention

Un des buts de la présente invention est de pallier tout ou partie aux inconvénients cités précédemment en fournissant un procédé et un système contribuant à permettre une identification/authentification certaine des pièces d'horlogerie.

Un autre but de la présente invention est de proposer un procédé d'identification/authentification qui soit simple, fiable et robuste.

Dans ce dessein l'invention porte sur un procédé d'authentification d'une pièce d'horlogerie à partir d'un dispositif électronique comprenant une interface de diffusion visuelle et/ou sonore d'une information et un module d'acquisition d'images, le procédé comprenant les étapes suivantes :
- génération par une unité de traitement du dispositif électronique d'un élément d'identification numérique à partir de caractéristiques descriptives d'une représentation graphique numérique de la pièce d'horlogerie, ladite étape comprenant :
   - une sous-étape d'élaboration desdites caractéristiques descriptives de la représentation graphique numérique comportant une phase d'identification de différents objets graphiques compris dans au moins une zone d'intérêt de ladite représentation graphique, ladite zone d'intérêt comprenant un défaut structurel et/ou esthétique de ladite pièce ;
   - une sous-étape de création de l'élément d'identification numérique à partir desdites caractéristiques descriptives des différents objets graphiques identifiés à l'exception d'une caractéristique descriptive relative au défaut structurel et/ou esthétique comprise dans ladite au moins une zone d'intérêt de la représentation graphique ;
- diffusion sur l'interface de diffusion du dispositif électronique d'un code d'identification de la marque et/ou du numéro de série de la pièce d'horlogerie pour fournir une information visuelle et/ou sonore d'authentification de ladite pièce d'horlogerie si la validité de l'élément d'identification numérique généré est vérifiée lors d'une sous-étape de comparaison, mise en œuvre par une unité de contrôle d'un serveur, entre l'élément d'identification numérique généré et un élément d'identification numérique de référence relatif à la pièce d'horlogerie, ledit élément d'identification numérique de référence ayant préalablement été créé par un dispositif de génération d'un tel élément d'identification numérique unique de référence de la pièce d'horlogerie.
Dans d'autres modes de réalisation :
- ladite étape de génération mise en œuvre par l'unité de traitement du dispositif électronique comprend une sous-étape de conception d'une représentation graphique numérique de la pièce d'horlogerie comportant une phase d'acquisition par le module d'acquisition du dispositif électronique d'au moins une image de tout ou partie de la pièce d'horlogerie ;
- la sous-étape comprend une phase d'application d'algorithmes de conception d'éléments d'indentification auxdites caractéristiques descriptives des différents objets graphiques identifiés à l'exception de la caractéristique descriptive relative au défaut structurel et/ou esthétique ;
- lors de la phase, l'unité de traitement du dispositif électronique en exécutant ces algorithmes réalise une sélection des caractéristiques descriptives, à l'exception de la caractéristique descriptive relative au défaut structurel et/ou esthétique, qui sont situées sur la représentation graphique en périphérie de la caractéristique descriptive relative au défaut structurel et/ou esthétique ;
- que lors de la phase, l'unité de traitement du dispositif électronique en exécutant ces algorithmes réalise une sélection des caractéristiques descriptives, à l'exception de la caractéristique descriptive relative au défaut structurel et/ou esthétique, qui sont situées sur la représentation graphique dans une zone entourant la caractéristique descriptive relative au défaut structurel et/ou esthétique dont la largeur L peut être préalablement configurée ;
- une zone d'intérêt de référence et ladite zone d'intérêt sont chacune une partie de l'habillage de la pièce d'horlogerie comprise/illustrée sur/dans la représentation graphique, cette zone comprenant ledit défaut structurel et/ou esthétique ;
- la zone d'intérêt est similaire à une zone d'intérêt de référence relative à ladite pièce d'horlogerie qui est archivée dans une base données du serveur.

L'invention porte également sur un système d'authentification d'une pièce d'horlogerie comprenant un dispositif électronique, un dispositif de génération et un serveur mettant en œuvre ledit procédé, le dispositif électronique comprenant une interface de diffusion visuelle et/ou sonore d'une information et un module d'acquisition d'images et le serveur comprenant une base de données comprenant des éléments d'identifiants numérique de références, le système comprenant une architecture réseau sans fil et/ou filaire reliant le dispositif électronique audit serveur.

Avantageusement, le dispositif de génération est apte à contribuer à la création d'éléments d'identification numérique de référence relatifs à des pièces d'horlogerie.

L'invention porte aussi sur un programme d'ordinateur comprenant des instructions de code de programme pour l'exécution des étapes de ce procédé lorsque ledit programme est exécuté par l'unité de contrôle et les unités de traitement de respectivement du serveur et des dispositifs de génération et électronique du système.

### Brève description des figures

D'autres caractéristiques et avantages de la présente invention ressortiront plus clairement de la description détaillée qui suit, faite en liaison avec les figures annexées listées ci-dessous :
- la figure 1 est une représentation schématique d'un système d'authentification/d'identification d'une pièce d'horlogerie à partir d'un dispositif électronique comprenant une interface de diffusion visuelle et/ou sonore d'une information et un module d'acquisition d'images, selon un mode de réalisation de l'invention, et
- la figure 2 est un logigramme relatif à un procédé d'authentification/d'identification de cette pièce d'horlogerie, selon un mode de réalisation de l'invention.

### Description détaillée de l'invention

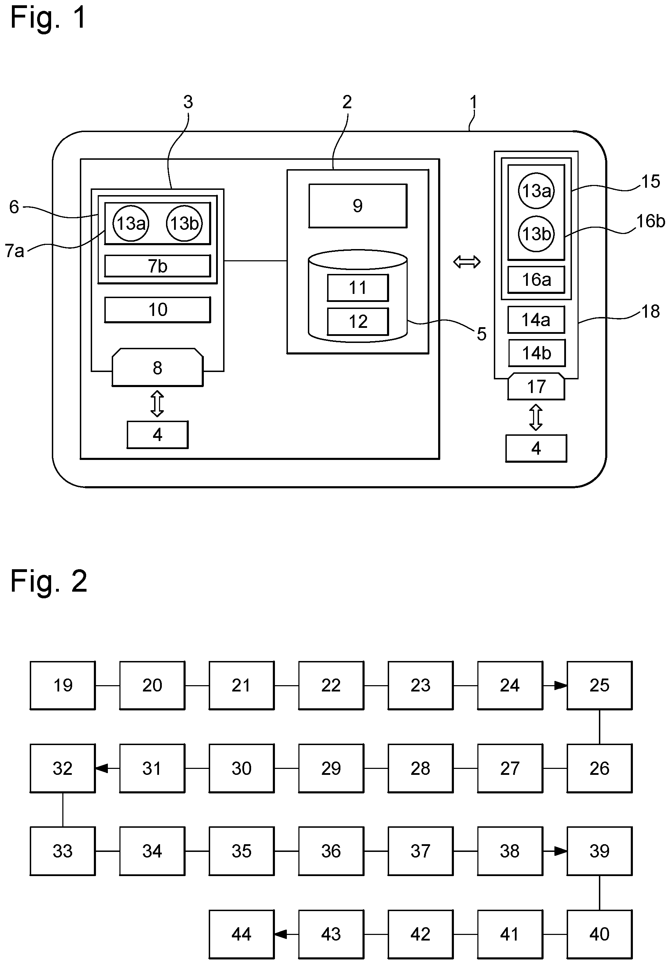

La figure 1 montre une représentation schématique du système 1 d'authentification/d'identification d'une pièce d'horlogerie 4 à partir d'un dispositif électronique 18 comprenant une interface de diffusion 14b visuelle et/ou sonore d'une information et un module d'acquisition 17 d'images. On comprend donc qu'un tel système 1 permet d'authentifier/d'identifier ladite pièce d'horlogerie 4 à partir notamment d'un dispositif électronique 18.

Dans le présent mode de réalisation de l'invention, une telle pièce d'horlogerie 4 est de préférence une montre mécanique. Elle peut cependant dans une variante être une montre électronique ou électro-mécanique.

Un tel système 1 comprend donc la pièce d'horlogerie 4, le dispositif électronique 18, un dispositif de génération 3 d'un élément d'identification 11 numérique unique de référence de la pièce d'horlogerie 4 ainsi qu'un serveur 2. Ce système 1 comprend aussi une architecture réseau sans fil et/ou filaire reliant le dispositif de génération 3 et le dispositif électronique 18 avec le serveur 2.

Ainsi que nous l'avons évoqué précédemment, un tel système 1 permet de participer à des échanges transactionnels requérant que la pièce d'horlogerie 4 soit authentifiée. Plus précisément, l'échange transactionnel est mis en œuvre par le dispositif électronique 18 qui durant cet échange participe à authentifier la pièce d'horlogerie 4 en générant un élément d'identification relative à cette pièce 4 dont la validité est vérifiée ensuite par rapport à l'élément d'identification 11 de référence correspondant à cette pièce d'horlogerie 4. Dans ce contexte, ce système 1 est aussi apte à mettre en œuvre la création de l'élément d'identification 11 de référence qui est unique.

Cet élément d'identification 11 de référence est unique car il résulte de caractéristiques visuelles et structurelles particulières et spécifiques de la pièce d'horlogerie 4. Ces caractéristiques sont propres à chaque pièce d'horlogerie 4 quand bien même elles appartiendraient à un même modèle d'une marque similaire. En effet, entre des pièces d'horlogerie d'un même modèle et de marque similaire, il y a par exemple des différences structurelles et/ou esthétiques qui sont visibles, et encore plus à une échelle macroscopique, et qui résultent par exemple de processus de fabrication des composants horlogers constituant ces pièces 4 ou encore d'opérations d'assemblage de ces composants entre eux pour concevoir ces pièces d'horlogerie 4.

Dans ce système 1, le serveur 2 comporte une base de données 5 archivant notamment les éléments d'identification 11 numérique de référence de pièces d'horlogerie 4 qui ont été créés. Chaque élément d'identification 11 de référence est archivé dans cette base de données 5 en étant associé à des données descriptives 12 de la pièce d'horlogerie 4 à laquelle il se rapporte.

Ces données descriptives 12 comprennent de manière non limitative et non exhaustive :
- la représentation graphique de la pièce d'horlogerie 4 à partir de laquelle est généré l'élément d'identification 11 de référence ;
- des données relatives à au moins une zone d'intérêt de référence sélectionnée dans la représentation graphique et à partir de laquelle est généré l'élément d'identification 11 de référence ;
- une ou plusieurs images capturées de cette pièce d'horlogerie 4 utilisées pour la génération de l'élément d'identification 11 de référence ;
- des données d'information sensible relatives à la pièce d'horlogerie :
   - le code d'identification de la marque de cette pièce d'horlogerie 4 ;
   - un numéro de série pour authentifier la pièce d'horlogerie 4;
   - référence du modèle de cette pièce d'horlogerie 4 ;
   - les données techniques de cette pièce d'horlogerie 4 ;
- etc...

Dans ce serveur 2, l'unité de contrôle 9 comprend des ressources matérielles et logicielles en particulier au moins un processeur coopérant avec des éléments de mémoire. Cette unité de contrôle 9 est apte à exécuter des instructions pour la mise en œuvre d'un programme d'ordinateur visant par exemple à assurer la gestion de la base de données 5 du serveur 2 et/ou encore le traitement des requêtes/instructions/données provenant/transmises du/vers le dispositif de génération 3 ou du/vers le dispositif électronique 18 participant à un processus d'authentification de la pièce d'horlogerie 4.

On notera que l'unité de contrôle 9 est connectée au dispositif de génération 3 et au dispositif électronique 18 par l'intermédiaire d'une unité de communication du serveur 2. Une telle unité de communication est apte à mettre en œuvre des protocoles de communication sécurisés au sein de l'architecture réseau de ce système 1.

Dans ce système 1, le dispositif électronique 18 peut être par exemple un ordinateur, un ordiphone, un smartphone, une tablette, ou encore une borne électronique notamment une borne de paiement ou terminal de paiement. Un tel dispositif électronique 18 comprend de manière non limitative ou non exhaustive :
- une unité de traitement 15 comportant des ressources matérielles et logicielles en particulier au moins un processeur 16a coopérant avec des éléments de mémoire 16b ;
- l'interface de diffusion 14b sonore (par ex. : un haut-parleur) et/ou visuelle (par ex. : un écran) d'une information ;
- une interface de communication 14a permettant d'établir une liaison de communication entre son unité de traitement 15 et l'unité de contrôle 9 du serveur 2 pour la réalisation d'échange de données ;
- une interface de sélection tel qu'un clavier ou encore une interface tactile comprise par exemple dans l'interface de diffusion 14b comprenant un écran ;
- au moins un module de capture d'un flux audio comprenant au moins un microphone ;
- le module d'acquisition 17 d'images également appelé module de capture d'au moins une image comprenant notamment un capteur d'images du type par exemple capteurs matriciels CCD (pour « Charged Coupled Device » en anglais) ou encore CMOS (pour « Complementary Metal-Oxide-Semiconductor » en anglais), et
- une interface homme-machine IHM.

Dans ce dispositif électronique 18, l'unité de traitement 15 est reliée entre autres au module d'acquisition 17 d'images, à l'interface de diffusion 14b, à l'interface de communication, à l'interface de sélection et à l'interface homme-machine IHM. Cette unité de traitement 15, est notamment apte à exécuter des instructions pour la mise en œuvre du programme d'ordinateur visant par exemple à assurer le traitement des requêtes/instructions/données provenant/transmises du/vers le serveur 2, notamment du/vers son unité de contrôle 9.

Dans ce système 1, le dispositif de génération 3 de l'élément d'identification 11 numérique unique de référence comprend de manière non limitative et non exhaustive :
- une unité de traitement 6 comportant des ressources matérielles et logicielles en particulier au moins un processeur 7b coopérant avec des éléments de mémoire 7a ;
- un module de capture 8 d'au moins une image relative à la pièce d'horlogerie 4 ;
- un module de communication 10 qui est apte à mettre en œuvre des protocoles de communication sécurisés au sein de l'architecture réseau de ce système 1 notamment pour échanger des données avec le serveur 2 ;
- une interface homme-machine IHM qui peut notamment être manipulée par un opérateur pour sa configuration.

Dans ce dispositif de génération 3, l'unité de traitement 6 est apte à mettre en oeuvre :
- des algorithmes de traitement numérique 13a d'images qui sont destinés à être appliqués à ladite au moins une image relative à la pièce d'horlogerie 4, et
- des algorithmes de conception 13b d'éléments d'indentification qui sont appliqués à des objets graphiques extraits de ladite au moins une image en particulier de la représentation graphique relative à la pièce d'horlogerie 4.

On notera que l'unité de traitement 15 du dispositif électronique 18 est apte à mettre en œuvre les mêmes algorithmes 13a, 13b afin de générer un élément d'identification qui est similaire à l'élément d'identification 11 de référence.

Dans ce dispositif de génération 3, le module de capture 8 comprend au moins un capteur photographique comportant notamment un capteur d'images du type par exemple capteurs matriciels CCD (pour « Charged Coupled Device » en anglais) ou encore CMOS (pour « Complementary Metal-Oxide-Semiconductor » en anglais).

En référence à la figure 2, ce système 1 met en œuvre un procédé d'authentification/d'identification de la pièce d'horlogerie 4 à partir du dispositif électronique 18 comprenant l'interface de diffusion 14b visuelle et/ou sonore d'une information et du module d'acquisition 17 d'images.

Pour ce faire, ce procédé comprend une étape préalable de création 19 de l'élément d'identification 11 numérique unique de référence de la pièce d'horlogerie 4. Cette étape de création 19 comprend une sous-étape de capture 20 d'au moins une image de tout ou partie de la pièce d'horlogerie 4. Une telle sous-étape 20 est mise en œuvre par le dispositif de génération 3 et en particulier par son unité de traitement 6. Lors de cette sous-étape 20, la pièce d'horlogerie 4 est agencée sur un support de ce dispositif 3 et l'unité de traitement 6 réalise alors le pilotage dudit au moins un capteur photographique afin de capturer au moins une image de cette pièce d'horlogerie 4.

Ensuite, cette étape 19 préalable du procédé prévoit la réalisation d'une sous-étape de traitement 21 numérique de ladite au moins une image capturée comprenant une représentation graphique de tout ou partie de la pièce d'horlogerie 4. Cette sous-étape 21 est mise en œuvre par l'unité de traitement 6 qui comporte dans ses éléments de mémoire 7a les algorithmes de traitement 13a numérique d'images.

Une telle sous-étape 21 comprend en particulier une phase de sélection 22 d'au moins une zone d'intérêt de référence de ladite représentation graphique comprenant un défaut structurel et/ou esthétique, lesdites zones servant de base pour la conception de l'élément d'identification 11 unique.

Dans le présent mode de réalisation, chaque zone d'intérêt de référence est une partie de l'habillage de la pièce d'horlogerie 4 comprise/illustrée sur/dans la représentation graphique, cette zone comprenant ce défaut structurel et/ou esthétique. Rappelons ici que l'habillage d'une telle pièce 4 est l'ensemble de ses parties constitutives qui entoure son mouvement, donnant ainsi à cette pièce 4 son esthétique et son style, permettant aussi l'indication de toutes ses fonctions. Dans le contexte de l'invention, la zone d'intérêt de référence peut être un élément d'habillage mentionné ci-après de manière non limitative et non exhaustive : un cadran pouvant comprendre des guichets avec des indications horaires, des aiguilles, une glace, un réhaut, une lunette, un ou des boutons, une couronne, un bracelet, un fond du boitier ou encore une carrure de cette pièce 4. Dans une alternative, cette zone d'intérêt de référence comprise dans la représentation graphique peut comprendre plusieurs parties d'éléments d'habillage assemblés ensemble. Et dans une autre alternative cette zone d'intérêt de référence peut être une partie d'un élément d'habillage.

Ainsi qu'il a été précisé, chaque zone d'intérêt référence sélectionnée comprend au moins un défaut structurel et/ou esthétique. Un tel défaut peut être :
- un défaut circulaire compris sur/dans la surface de la zone d'intérêt tel qu'une bulle, un agglomérat de matière, etc...
- un défaut linéaire ou étiré compris sur/dans la surface de la zone d'intérêt de référence tel qu'une tache d'abrasion, rayures, lignes, résidu, etc...
- un défaut structurel de/dans la zone d'intérêt de référence tel qu'une déformation, un écart anormal entre deux éléments présents dans/sur la surface de cette zone, une protubérance, etc...

On notera que ces défauts appartiennent à ceux qui ont été engendrés par des outils ou des procédés de fabrication ou d'assemblage relatif à cette zone d'intérêt de référence.

Une fois la zone d'intérêt de référence sélectionnée, la sous-étape de traitement 21 prévoit alors la mise en œuvre d'une phase d'identification 23 des différents objets graphiques compris dans cette zone d'intérêt de référence. Dans ce contexte, les objets graphiques peuvent être de manière non limitative et non exhaustive relatifs à :
- les appliques, index et symboles ;
- ouverture telle qu'un guichet ou partie évidée du cadran rendant visible une partie du mouvement (cas montre squelette) ;
- éléments ou représentation graphique visible dans cette ouverture ;
- un élément graphique en deux ou trois dimensions d'une inscription présente sur la face du cadran, de la glace, de la carrure, de la lunette, du fond ou du réhaut par exemple un chiffre, une lettre ou encore un symbole ;
- un élément d'ornement tel qu'une pierre précieuse ;
- une plaque constituant le cadran et qui porte notamment les appliques et comprend le ou les guichets de ce cadran ;
- la couronne et/ou le bouton ;
- etc...

La sous-étape de traitement 21 comprend ensuite une phase d'extraction 24 de caractéristiques descriptives de cette représentation graphique en particulier de chacun des objets graphiques identifiés.

Ces caractéristiques descriptives définissent notamment l'aspect/l'apparence visuel/esthétique de chaque objet graphique. Dans ce contexte, ces caractéristiques descriptives comprennent de manière non limitative et non exhaustive :
- une forme de l'objet graphique constituant la représentation graphique numérique, cette forme peut être une forme géométrique du type cercle, sphère, ellipse, cône, cylindre, tronc de cône, triangle, polyèdre, une combinaison d'au moins deux formes géométriques différentes ou similaires, etc... ;
- des dimensions de l'objet graphique constituant la représentation graphique numérique, ces dimensions peuvent correspondre à une épaisseur, une largeur, une longueur, profondeur, une surface, un volume, etc... ;
- une ou des couleurs présent sur la ou les faces visibles de l'objet graphique ;
- le défaut structurel et/ou esthétique ;
- une position relative entre deux objets graphiques ou plus lorsque la représentation graphique comprend plusieurs de ces objets.

Les caractéristiques descriptives extraites sont ensuite archivées dans les éléments de mémoire 7a de l'unité de traitement 6 du dispositif de génération 3.

L'étape 19 préalable du procédé comprend ensuite une sous-étape de génération 25 de l'élément d'identification 11 numérique de référence à partir desdites caractéristiques descriptives extraites à l'exception de la caractéristique descriptive relative au défaut structurel et/ou esthétique comprise dans ladite au moins une zone d'intérêt de référence. Cette sous-étape 25 est mise en œuvre par l'unité de traitement 6 qui comporte dans ses éléments de mémoire 7a les algorithmes de conception d'éléments d'indentification.

Cette sous-étape de génération 25 comprend une phase d'application 26 audites caractéristiques descriptives extraites, à l'exception de la caractéristique descriptive relative au défaut structurel et/ou esthétique comprise dans ladite au moins une zone d'intérêt de référence, des algorithmes de conception 13b d'éléments d'indentification. Lors de cette phase 26, l'unité de traitement en exécutant ces algorithmes réalise une sélection des caractéristiques descriptives extraites, à l'exception de la caractéristique descriptive relative au défaut structurel et/ou esthétique comprise dans ladite au moins une zone d'intérêt de référence, qui sont situées sur la représentation graphique :
- en périphérie de la caractéristique descriptive relative au défaut structurel et/ou esthétique, ou
- dans une zone entourant la caractéristique descriptive relative au défaut structurel et/ou esthétique dont la largeur L peut être préalablement configurée. Cette largeur correspond à la distance espaçant les deux bords opposés de cette zone de préférence circulaire.

Le procédé prévoit ensuite une étape de stockage 27dans la base de données 5 du serveur 2 de :
- cet élément d'identification 11 de référence ;
- la représentation graphique de la pièce d'horlogerie 4 à partir de la laquelle est généré cet élément d'identification 11 ;
- des données relatives à ladite au moins une zone d'intérêt de référence sélectionnée dans la représentation graphique et à partir de la laquelle est généré l'élément d'identification 11 ;
- une ou plusieurs images capturées de cette pièce d'horlogerie 4 utilisées pour la génération de la représentation graphique .

Le procédé prévoit ensuite dans le cadre de l'authentification/identification de la pièce d'horlogerie 4, une étape de génération 28 d'un élément d'identification numérique à partir de caractéristiques descriptives d'une représentation graphique numérique de la pièce d'horlogerie 4. On notera qu'une telle étape 28 est mise en œuvre par le dispositif électronique 18 et en particulier par son unité de traitement 15.

Cette étape de génération 28 comprend une sous-étape d'agencement 29 de la pièce d'horlogerie 4 à proximité du dispositif électronique 18. Plus particulièrement, cette sous-étape 29 prévoit une phase de positionnement 30 de la pièce d'horlogerie 4 en regard du module d'acquisition 17 d'images de ce dispositif 18. Plus précisément, lors de cette phase 30 le boitier de la pièce côté cadran et/ou côté fond ainsi que tout ou partie du bracelet sont agencés en regard de ce module d'acquisition 17.

Ensuite, cette étape 28 du procédé comprend une sous-étape de conception 31 d'une représentation graphique numérique de la pièce d'horlogerie 4. Cette sous-étape 31 comporte une phase d'acquisition 32 par le module d'acquisition 17 du dispositif électronique 18 d'au moins une image de tout ou partie de la pièce d'horlogerie 4. Lors de cette sous-étape 31, l'unité de traitement 15 réalise alors le pilotage dudit au moins un capteur photographique afin de capturer au moins une image de cette pièce d'horlogerie 4.

Par la suite, l'étape de génération 28 comprend une sous-étape d'élaboration 33 de caractéristiques descriptives de la représentation graphique numérique comportant une phase d'identification 34 de différents objets graphiques compris dans au moins une zone d'intérêt de ladite représentation graphique. On notera que la zone d'intérêt permet de sélectionner la partie de l'habillage de la pièce d'horlogerie qui comprend le défaut structurel et/ou esthétique, cette partie devant servir pour la conception de l'élément d'identification. On rappelle que la zone d'intérêt est une partie de l'habillage de la pièce d'horlogerie 4 qui comprend le défaut structurel et/ou esthétique évoqué précédemment. Cette représentation graphique est comprise dans ladite au moins une image capturée de tout ou partie de la pièce d'horlogerie 4. Une telle sous-étape d'élaboration 33 est mise en œuvre par l'unité de traitement 15 du dispositif électronique 18 qui comporte dans ses éléments de mémoire 16b les algorithmes de traitement 13a numérique d'images.

La sous-étape 33 prévoit alors la mise en œuvre d'une phase d'identification 35 des différents objets graphiques compris dans cette zone d'intérêt.

Cette sous-étape d'élaboration 33 comprend ensuite une phase d'extraction 36 des caractéristiques descriptives des objets graphiques identifiés dans la représentation graphique numérique.

Ensuite, l'étape de génération 28 comprend une sous-étape de création 37 de l'élément d'identification numérique à partir desdites caractéristiques descriptives extraites des différents objets graphiques identifiés dans ladite au moins une zone d'intérêt, à l'exception de la caractéristique descriptive relative au défaut structurel et/ou esthétique comprise dans cette zone d'intérêt. Une telle sous-étape de création 37 est mise en œuvre par l'unité de traitement 15 qui comporte dans ses éléments de mémoire 16b les algorithmes de conception d'éléments d'indentification.

Cette sous-étape 37 comprend une phase d'application 38 audites caractéristiques descriptives à l'exception de la caractéristique descriptive relative au défaut structurel et/ou esthétique, des algorithmes de conception d'éléments d'indentification. Lors de cette phase 38, l'unité de traitement en exécutant ces algorithmes, réalise une sélection des caractéristiques descriptives, à l'exception de la caractéristique descriptive relative au défaut structurel et/ou esthétique, qui sont situées sur la représentation graphique :
- en périphérie de la caractéristique descriptive relative au défaut structurel et/ou esthétique, ou
- dans une zone entourant la caractéristique descriptive relative au défaut structurel et/ou esthétique dont la largeur L peut être préalablement configurée. Cette largeur L correspond à la distance espaçant les deux bords opposés de cette zone de préférence de forme circulaire, ou
- dans une zone entourant la caractéristique descriptive relative au défaut structurel et/ou esthétique, la zone présentant une surface S qui peut être préalablement configurée. Cette surface S est de préférence 5 à 10 fois plus grande que la surface relative au défaut de la zone d'intérêt.

On notera que durant cette étape de génération, la zone d'intérêt est similaire à la zone d'intérêt de référence relative à ladite pièce d'horlogerie 4 qui est archivée dans une base données 5 du serveur 2.

Ce procédé comprend ensuite une étape de diffusion 39 sur l'interface de communication visuelle et/ou sonore 14b du dispositif électronique 18 d'un code d'identification de la marque et/ou du numéro de série de la pièce d'horlogerie 4 pour fournir une information visuelle/sonore d'authentification de ladite pièce d'horlogerie si l'élément d'identification numérique généré est valide.

Cette étape 39 comprend une sous-étape de transmission 40 de l'élément d'identification numérique généré au server 2. Ensuite, l'étape de de diffusion 39 comprend une sous-étape de comparaison 41 permettant de vérifier la validité de l'élément d'identification numérique généré lors de l'étape de génération 28. Cette sous-étape 41 prévoit la mise en œuvre d'une comparaison entre l'élément d'identification numérique généré et un élément d'identification numérique de référence relatif à la pièce d'horlogerie. Cette sous-étape de comparaison 41, mise en œuvre par l'unité de contrôle 9 du serveur 2, comprend une phase de rejet 42 de l'authentification/validation si l'élément d'identification numérique généré est sensiblement différent ou différent de l'élément d'identification numérique de référence 11. A l'inverse, cette sous-étape de comparaison 41 comprend une phase d'approbation/acceptation 43 de l'authentification/validation si l'élément d'identification numérique généré est sensiblement similaire ou similaire à l'élément d'identification numérique de référence. A la suite de la phase d'approbation/acceptation 43, l'unité de contrôle 9 transmet une requête à la base de données visant à récupérer des données d'information sensible relatives à la pièce d'horlogerie, en particulier le code d'identification de la marque et/ou du numéro de série de la pièce d'horlogerie 4.

Par la suite l'étape de diffusion 39 comprend une sous-étape d'envoi 44 par l'unité de contrôle 9 serveur 2 d'un message comprenant tout ou partie de ces données d'information sensible, ou le code d'identification de la marque et/ou du numéro de série de la pièce d'horlogerie 4, au dispositif électronique 18.

Ainsi que nous l'avons précisé précédemment un tel élément d'identification 11 est unique pour chaque pièce d'horlogerie 4 et permet ainsi de pourvoir authentifier et/ou identifier cette pièce d'horlogerie 4.

En outre, l'invention concerne un programme d'ordinateur comprenant des instructions de code de programme pour l'exécution des étapes de ce procédé lorsque ledit programme est exécuté par l'unité de contrôle 9 et les unités de traitement 6, 15 de respectivement du serveur 2 et des dispositifs de génération et électronique 3, 18.

Il va de soi que la présente invention n'est pas limitée au mode de réalisation qui vient d'être décrit et que diverses modifications et variantes simples peuvent être envisagées par l'homme du métier sans sortir du cadre de l'invention tel que défini par les revendications annexées.

## Revendications

1. Procédé d'authentification d'une pièce d'horlogerie (4) à partir d'un dispositif électronique (18) comprenant une interface de diffusion (14b) visuelle et/ou sonore d'une information et un module d'acquisition (17) d'images, le procédé comprenant les étapes suivantes :
- génération (28) par une unité de traitement (15) du dispositif électronique (18) d'un élément d'identification numérique à partir de caractéristiques descriptives d'une représentation graphique numérique de la pièce d'horlogerie (4), ladite étape (28) comprenant :
• une sous-étape d'élaboration (33) desdites caractéristiques descriptives de la représentation graphique numérique comportant une phase d'identification (34) de différents objets graphiques compris dans au moins une zone d'intérêt de ladite représentation graphique, ladite zone d'intérêt comprenant un défaut structurel et/ou esthétique de ladite pièce (4);
• une sous-étape de création (37) de l'élément d'identification numérique à partir desdites caractéristiques descriptives des différents objets graphiques identifiés à l'exception d'une caractéristique descriptive relative au défaut structurel et/ou esthétique comprise dans ladite au moins une zone d'intérêt de la représentation graphique ;
- diffusion (39) sur l'interface de diffusion du dispositif électronique (18) d'un code d'identification de la marque et/ou du numéro de série de la pièce d'horlogerie (4) pour fournir une information visuelle et/ou sonore d'authentification de ladite pièce d'horlogerie (4) si la validité de l'élément d'identification numérique généré est vérifiée lors d'une sous-étape de comparaison (41), mise en œuvre par une unité de contrôle (9) d'un serveur (2), entre l'élément d'identification numérique généré et un élément d'identification numérique de référence relatif à la pièce d'horlogerie (4), ledit élément d'identification numérique de référence ayant préalablement été créé par un dispositif de génération (3) d'un tel élément d'identification numérique unique de référence de la pièce d'horlogerie (4).

2. Procédé selon la revendication précédente, **caractérisé en ce que** ladite étape de génération (28) mise en œuvre par l'unité de traitement (15) du dispositif électronique (18) comprend une sous-étape de conception (31) d'une représentation graphique numérique de la pièce d'horlogerie (4) comportant une phase d'acquisition (32) par le module d'acquisition (17) du dispositif électronique (18) d'au moins une image de tout ou partie de la pièce d'horlogerie (4).

3. Procédé selon l'une quelconque des revendications précédentes, **caractérisé en ce que** la sous-étape (37) comprend une phase d'application (38) d'algorithmes de conception d'éléments d'indentification auxdites caractéristiques descriptives des différents objets graphiques identifiés à l'exception de la caractéristique descriptive relative au défaut structurel et/ou esthétique.

4. Procédé selon la revendication précédente, **caractérisé en ce que** lors de la phase (38), l'unité de traitement (15) du dispositif électronique (18) en exécutant ces algorithmes réalise une sélection des caractéristiques descriptives, à l'exception de la caractéristique descriptive relative au défaut structurel et/ou esthétique, qui sont situées sur la représentation graphique en périphérie de la caractéristique descriptive relative au défaut structurel et/ou esthétique.

5. Procédé selon la revendication 3, **caractérisé en ce que** lors de la phase (38), l'unité de traitement (15) du dispositif électronique (18) en exécutant ces algorithmes réalise une sélection des caractéristiques descriptives, à l'exception de la caractéristique descriptive relative au défaut structurel et/ou esthétique, qui sont situées sur la représentation graphique dans une zone entourant la caractéristique descriptive relative au défaut structurel et/ou esthétique dont la largeur L peut être préalablement configurée.

6. Procédé selon l'une quelconque des revendications précédentes, **caractérisé en ce qu'**une zone d'intérêt de référence et ladite zone d'intérêt sont chacune une partie de l'habillage de la pièce d'horlogerie (4) comprise/illustrée sur/dans la représentation graphique, cette zone comprenant ledit défaut structurel et/ou esthétique.

7. Procédé selon l'une quelconque des revendications précédentes, **caractérisé en ce que** la zone d'intérêt est similaire à une zone d'intérêt de référence relative à ladite pièce d'horlogerie (4) qui est archivée dans une base données (5) du serveur (2).

8. Système (1) d'authentification d'une pièce d'horlogerie (4) comprenant un dispositif électronique (18), un dispositif de génération (19) et un serveur (2) mettant en œuvre le procédé selon l'une quelconque des revendications 1 à 7, le dispositif électronique (18) comprenant une interface de diffusion (14b) visuelle et/ou sonore d'une information et un module d'acquisition (17) d'images et le serveur (2) comprenant une base de données (5) comprenant des éléments d'identifiants numérique de références (11), le système (1) comprenant une architecture réseau sans fil et/ou filaire reliant le dispositif électronique (18) audit serveur (2).

9. Système (1) selon la revendication précédente, **caractérisé en ce que** le dispositif de génération (3) est apte à contribuer à la création d'éléments d'identification numérique de référence (11) relatifs à des pièces d'horlogerie (4).

10. Programme d'ordinateur comprenant des instructions de code de programme pour l'exécution des étapes du procédé selon les revendications 1 à 7 lorsque ledit programme est exécuté par l'unité de contrôle (9) et les unités de traitement (6, 15) de respectivement du serveur (2) et des dispositifs de génération et électronique (3, 18) du système (1).
